# FASCICULE DE BREVET EUROPEEN

(11) **EP 3 599 564 B1**
(45) Date de publication et mention de la délivrance du brevet: **14.07.2021**
(21) Numéro de dépôt: 19188594.6
(22) Date de dépôt: 26.07.2019
(51) Int. Cl.: G06F 21/34, H04L 9/08, H04L 29/06, H04L 9/32, G06Q 20/38, G06Q 20/40, G06Q 20/34

(54) **PROCÉDÉ DE GESTION D'UN DISPOSITIF ÉLECTRONIQUE DÉLIVRANT DES CODES D'AUTHENTIFICATIONS, DISPOSITIFS ET SERVEURS ASSOCIÉS**
EINE METHODE ZUR VERWALTUNG EINES ELEKTRONISCHEN GERÄTES ZUR GENERIERUNG VON AUTHENTIFIZIERUNGSCODES, ASSOZIIERTE GERÄTE UND SERVER
A METHOD FOR MANAGING AN ELECTRONIC DEVICE DELIVERING AUTHENTICATION CODES, DEVICES AND ASSOCIATED SERVERS

(30) Priorité: 26.07.2018 FR 1856956
(43) Date de publication de la demande: 29.01.2020
(73) Titulaire: IDEMIA France, 92400 Courbevoie (FR)
(72) Inventeur: LESEIGNEUR, Gilles, 92400 COURBEVOIE (FR); DEPRUN, Jean-François, 92400 COURBEVOIE (FR)
(74) Mandataire: Cabinet Beau de Loménie

(56) Documents cités:
- EP-A1- 3 217 343
- US-A1- 2008 029 607
- US-A1- 2013 024 372

## Description

### Arrière-plan de l'invention

La présente invention concerne un dispositif électronique associé à un utilisateur, et en particulier un dispositif électronique qui délivre des codes d'authentifications à un utilisateur. La présente invention est définie dans les revendications indépendantes 1, 9, 10 et 11.

L'invention concerne plus particulièrement les codes d'authentifications parfois appelés codes d'authentification dynamiques.

De tels codes peuvent être utilisés dans des dispositifs électroniques tels que des cartes bancaires ou encore des jetons d'authentifications.

Lorsque l'on utilise une carte bancaire pour effectuer des transactions financières à distance (sur internet ou par téléphone), il existe des risques de fraudes qui sont plus importants que lorsque l'utilisateur se présente dans un point de vente avec sa carte bancaire. Il a donc été proposé de demander aux utilisateurs de saisir un code appelé code CW (« Card Vérification Value » en langue anglaise) pour authentifier les transactions et indiquer que l'utilisateur est bien en possession de la carte bancaire. Dans la technique antérieure, les codes CW étaient statiques et ils étaient imprimés au-dos de la carte bancaire. Comme on peut le concevoir, cette solution n'est pas suffisamment sécurisée.

Il a donc été proposé d'équiper les cartes bancaires d'écrans sur lesquels on peut afficher des codes d'authentifications appelés CW dynamiques. Les codes CW dynamiques changent régulièrement, par exemple toutes les heures. Du côté du serveur qui va authentifier la transaction, on actualise également régulièrement le code d'authentification qui sera associé à la carte bancaire pour que les transactions puissent se réaliser.

Les cartes bancaires qui délivrent des codes CW dynamiques sont donc des dispositifs électroniques complexes, car ces cartes bancaires comportent toutes un microcircuit, un écran, une batterie qui peut alimenter l'écran, et enfin une horloge qui va servir à actualiser le code CW dynamique (de manière synchrone avec le serveur). Il existe un risque qu'un ou plusieurs de ces éléments soient défaillants.

Par exemple, en cas d'une défaillance de l'horloge de la carte bancaire, la carte délivrera des codes d'authentifications qui ne sont pas synchronisés avec ceux du serveur utilisé pour authentifier les transactions. En cas de défaillance de la batterie, l'écran ne pourra pas afficher de nouveaux codes d'authentifications. La carte bancaire devient donc inutilisable.

Généralement, les fabricants de carte bancaire et les entités émettrices de ces cartes (typiquement les banques) n'ont aucune information sur ces défaillances. Un utilisateur dont la carte est défaillante va demander un changement de carte, mais la cause de la défaillance de la carte ne sera généralement pas étudiée. Les fabricants de carte bancaire et les sociétés émettrices de ces cartes ont donc pris l'habitude de remplacer régulièrement ces cartes, par exemple, après une période de deux ans, cette période correspondant à une durée de vie normale d'une batterie. On comprend que les serveurs d'authentifications n'ont pas accès à des informations sur le fonctionnement de la carte. Il existe donc un besoin pour la fourniture d'information relative à l'état des cartes bancaires, pour pouvoir mieux gérer une flotte de cartes bancaires.

De l'état de la technique antérieure, on connait aussi des jetons d'authentifications qui sont utilisés pour authentifier des utilisateurs sur internet. Ces jetons d'authentifications pourront par exemple être utilisés pour accéder à des services, par exemple des services de messagerie. Les problèmes mentionnés ci-dessus qui se posent pour les cartes bancaires se posent également pour les jetons d'authentifications. De l'état de la technique antérieure, on connait aussi le document US 2008/029607.

### Objet et résumé de l'invention

Pour résoudre les problèmes mentionnés ci-dessus, la présente invention concerne un procédé de gestion d'un dispositif électronique associé à un utilisateur et mis en œuvre par le dispositif électronique, le procédé comprenant :
a- une obtention d'un code d'authentification actuel,
b- une détection d'un état prédéfini du dispositif électronique,
c- une application au code d'authentification actuel d'une fonction prédéfinie associée à l'état prédéfini, pour obtenir un code d'authentification modifié, et
d- une délivrance du code d'authentification modifié à l'utilisateur.

Dans ce procédé, le code d'authentification peut être utilisé pour une authentification ultérieure de l'utilisateur avec par exemple un serveur. Le serveur attendra par exemple le code d'authentification actuel pour authentifier l'utilisateur, mais, si un code d'authentification a été modifié, le serveur peut le détecter et donc obtenir une information sur l'état du dispositif électronique.

Le serveur peut donc déterminer que c'est un code d'authentification modifié qui a été saisi, et il pourra ainsi détecter que le dispositif électronique se trouve dans l'état prédéfini qui a été détecté au cours de l'étape b.

Bien entendu, l'invention n'est nullement limitée à la saisie de code d'authentification sur des interfaces de serveur. Elle trouve application dans la fourniture de codes d'authentification qui peuvent être saisis sur n'importe quelle interface.

Aussi, la délivrance du code d'authentification modifié à l'utilisateur peut être mise en œuvre par un affichage du code d'authentification modifié sur un écran du dispositif électronique. On pourra aussi délivrer le code d'authentification modifié à l'utilisateur par un signal audio, ou encore par affichage d'un code unidimensionnel ou bidimensionnel tel qu'un code-barres ou un QR code.

Selon un mode particulier de mise en œuvre, on détecte un état prédéfini compris parmi une pluralité d'états prédéfinis de la carte, chaque état prédéfini de la pluralité d'états prédéfinis étant respectivement associé une fonction prédéfinie.

Ce mode particulier de mise en œuvre permet de détecter plusieurs états prédéfinis sur la base d'un code d'authentification modifié.

Ce mode particulier de réalisation est donc particulièrement bien adapté aux dispositifs électroniques complexes dans lesquels différents types de défaillances peuvent apparaître.

Selon un mode particulier de mise en œuvre, chaque état prédéfini de la pluralité d'états prédéfinis est associé à un code d'état, et pour chaque état prédéfini l'application de la fonction prédéfinie associée à cet état prédéfini comprend l'application d'une fonction intermédiaire commune à tous les états prédéfinis et ayant pour variables le code d'authentification actuel et le code d'état de l'état prédéfini.

Ce mode particulier de mise en œuvre est particulièrement facile à implémenter. Le code d'état peut être une chaîne de caractères (lettres, chiffres, signes ou symboles ou plusieurs d'entre eux) qui a été choisie préalablement. La fonction intermédiaire qui est utilisée pourra donc être une fonction mathématique ou une fonction logique.

Selon un mode particulier de mise en œuvre, la fonction intermédiaire ayant pour variables le code d'authentification actuel et le code d'état de l'état prédéfini est la fonction ou exclusif.

La fonction ou exclusif est particulièrement facile à implémenter. Les propriétés de cette fonction logique permettent de retrouver un état prédéfini à partir d'un code d'authentification modifié.

Selon un mode particulier de mise en œuvre, on met en œuvre une première fois les étapes a à d à un premier instant, et à un deuxième instant postérieur au premier instant, on répète les étapes a à d, les codes d'authentification actuels étant déterminés au cours des étapes a en tenant compte de l'instant.

Ce mode particulier de mise en œuvre est adapté pour les dispositifs électroniques qui délivrent des codes d'authentifications mis à jour régulièrement, par exemple toutes les heures. Quand un code d'authentification actuel doit être mis à jour (en tenant compte de l'instant), on remet également à jour le code d'authentification modifié. Ainsi, les instants sont définis comme une durée s'écoulant depuis une référence temporelle, et tenir compte de l'instant signifie alors tenir compte de cette durée.

Aussi, un instant peut correspondre à la réalisation d'un événement. Il y a donc ici deux réalisations d'événements prédéfinis espacées dans le temps au premier instant et au deuxième instant. Tenir compte de l'instant peut alors comprendre une étape dans laquelle on tient compte de l'événement prédéfini associé à cet instant.

Par exemple, la réalisation d'un évènement peut être la pression d'un bouton, ou plus particulièrement la n-ième pression d'un bouton, et tenir compte de l'instant signifie alors tenir compte de n. Un compteur de pressions depuis la remise à l'utilisateur du dispositif électronique peut être utilisé. On notera qu'il est possible de détecter un nouvel état prédéfini du dispositif électronique à chaque fois qu'un nouveau code d'authentification modifié est obtenu.

Selon un mode particulier de mise en œuvre, le code d'authentification actuel comporte une pluralité de caractères, et ladite fonction prédéfinie est choisie pour modifier plusieurs caractères de la pluralité de caractères du code d'authentification actuel ou tous les caractères de la pluralité de caractères du code d'authentification actuel.

Bien qu'il soit possible de ne modifier qu'un seul caractère de la pluralité de caractères du code d'authentification actuel, il est préférable de modifier plusieurs caractères du code d'authentification actuel. Ceci permet notamment d'éviter qu'une erreur sur un caractère, lors de la saisie du code d'authentification modifié, ne conduise à la détection d'un état prédéfini du dispositif électronique.

Selon un mode particulier de mise en œuvre, dans l'étape b, on détecte plusieurs états prédéfinis du dispositif électronique, l'étape c comprenant alors une application au code d'authentification actuel d'une fonction prédéfinie associée auxdits plusieurs états prédéfinis, pour obtenir un code d'authentification modifié.

Ce mode particulier de mise en œuvre permet de modifier le code d'authentification actuel pour que l'on puisse lire dans le code d'authentification modifié que le dispositif électronique se trouve dans plusieurs états prédéfinis simultanés. Ce mode particulier de mise en œuvre est donc bien adapté aux dispositifs électroniques complexes qui comportent une pluralité de composants.

Selon un mode particulier de mise en œuvre, la délivrance du code d'authentification modifié à l'utilisateur comprend un affichage du code d'authentification modifié sur un écran du dispositif électronique.

On notera que pour l'utilisateur, l'affichage d'un code d'authentification modifié est tout à fait analogue à l'affichage d'un code d'authentification actuel, par exemple un code d'authentification actuel selon la technique antérieure. Ainsi l'utilisateur peut prendre connaissance du code d'authentification modifié, le saisir sur une interface d'un serveur, et transmettre sans en avoir connaissance une information qui indique que le dispositif électronique se trouve dans un état prédéfini.

Selon un mode particulier de mise en œuvre, le dispositif électronique est en outre configuré pour afficher des codes d'authentification selon plusieurs modes d'affichage, le procédé comprenant en outre une sélection du mode d'affichage à utiliser pour afficher le code d'authentification tenant compte dudit état prédéfini détecté.

Dans ce mode particulier de mise en œuvre, on affiche le code d'authentification modifié, et on change le mode d'affichage utilisé pour l'affichage de ce code d'authentification modifié. Ce mode particulier de mise en œuvre s'applique également à la détection de plusieurs états prédéfinis détectés simultanément.

Si le code d'authentification est affiché sous la forme d'une chaîne de caractères, alors un mode d'affichage est ici une caractéristique de formatage de texte. Un changement de mode d'affichage vise un changement d'au moins une caractéristique de formatage de texte (le texte du code modifié). Une caractéristique de formatage de texte peut être, de manière non exhaustive, liée à la couleur du texte, à un soulignement, etc.

Alternativement, si le code d'authentification est affiché d'une manière qui diffère d'une chaîne de caractères, par exemple s'il est affiché sous la forme d'un code bidimensionnel, on pourra également mettre en œuvre des changements de mode d'affichage avec par exemple un choix de couleurs particulier.

Ce changement de mode d'affichage peut être perçu par un utilisateur et cela implique que l'utilisateur a connaissance d'une information supplémentaire, en plus du code modifié. Dès lors, il est possible de demander à l'utilisateur sur l'interface dans laquelle il va saisir un code si le mode d'affichage présente une caractéristique particulière, par exemple une caractéristique de formatage. Si cette interface est une interface d'un serveur, alors le serveur reçoit deux informations : le code saisi par l'utilisateur et une information sur le mode d'affichage du texte. L'information relative au mode d'affichage du texte peut être utilisée par exemple pour confirmer, du côté du serveur, l'état prédéfini du dispositif électronique.

Selon un mode particulier de mise en œuvre, le dispositif électronique est une carte à microcircuit de type CW dynamique ou un jeton d'authentification.

Si le dispositif électronique est une carte à microcircuit de type CCV dynamique, alors le code d'authentification actuel est le code CCV dynamique qui serait obtenu dans une carte selon la technique antérieure. Sur une carte de ce type, le code d'authentification modifié est affiché au dos de la carte à côté de la signature de l'utilisateur ou sur la face avant de la carte.

Selon un mode particulier de mise en œuvre, l'état prédéfini est choisi dans un groupe comprenant au moins un état parmi les états suivant: un état de fonctionnement normal, un état dans lequel une batterie du dispositif électronique est défaillante, un état dans lequel une mémoire du dispositif électronique est défaillante, un état dans lequel un module de détermination de l'instant du dispositif électronique est défaillant, et un état dans lequel le dispositif électronique a atteint une valeur de température prédéfinie.

Si l'état prédéfini est un état de fonctionnement normal, on peut choisir une fonction prédéfinie qui ne modifiera pas le code d'authentification actuel. Ainsi pour un état de fonctionnement normal le code d'authentification modifié est identique au code d'authentification actuel.

L'homme du métier saura implémenter la détection des états dans lesquels la batterie est défaillante, une mémoire est défaillante, ou encore un module de détermination de l'instant, par exemple une horloge, est défaillant.

Aussi, le suivi de la température par des capteurs est connu en tant que tel dans les cartes à micro circuit, et l'homme du métier saura définir des valeurs de température pouvant être considérées comme problématiques.

On peut noter que l'invention trouve application dans la détection des anomalies ou des défaillances. Elle trouve également application dans la détection d'autres états prédéfinis, par exemple la fin de la validité du dispositif électronique ou le nombre d'appuis sur un bouton dudit dispositif électronique.

L'invention concerne également un procédé de gestion d'un dispositif électronique associé à un utilisateur et mis en œuvre par un serveur, comprenant :
p- une obtention d'un code d'authentification actuel,
q- une réception d'un code d'authentification saisi associé au dispositif électronique,
r- une détection d'un état prédéfini du dispositif électronique à partir du code d'authentification actuel et du code d'authentification saisi, si le code d'authentification saisi peut être obtenu par une application au code d'authentification actuel d'une fonction prédéfinie associée à l'état prédéfini.

Ce procédé de gestion de dispositif électronique est mis en œuvre par un serveur, et il peut être mis en œuvre après la mise en œuvre du procédé de gestion d'un dispositif électronique mise en œuvre par un dispositif électronique tel que décrit ci-avant. En fait, le procédé mis en œuvre par un serveur est adapté pour traiter les codes d'authentifications modifiés qu'un utilisateur pourrait saisir. Dans ce procédé, on va traiter les codes d'authentifications saisis comme les codes d'authentifications qui ont été modifiés selon le procédé mise en œuvre par un dispositif électronique tel que décrit ci-avant.

L'obtention du code d'authentification actuel peut se faire d'une manière analogue à l'obtention d'un code d'authentification dynamique selon la technique antérieure.

La réception d'un code d'authentification saisi associé aux dispositifs électroniques peut se faire à travers des moyens de communications ou à travers un réseau tel que l'internet. En particulier, l'utilisateur peut saisir un code d'authentification sur une interface du serveur (par exemple qui apparait sur un terminal de l'utilisateur de type ordinateur ou téléphone).

Si le code d'authentification saisi peut être obtenu par une application au code d'authentification actuel d'une fonction prédéfinie associée à l'état prédéfini, alors on peut détecter que le dispositif électronique se trouve dans cet état prédéfini.

Selon un mode particulier de mise en œuvre, le procédé comprend en outre une comparaison du code d'authentification actuel avec le code d'authentification saisi reçu.

On peut noter que le procédé de gestion d'un dispositif électronique mis en œuvre par un serveur peut également comporter une étape d'authentification de l'utilisateur. Cette authentification tient compte du code d'authentification saisi et de la détection de l'état prédéfini.

En particulier, si le code d'authentification saisi est identique au code d'identification actuel (ce qui est le cas si un état prédéfini pour l'état « normal » utilise une fonction identité qui ne modifie pas le code d'authentification actuel ; ou si l'on n'applique aucune fonction au code d'authentification actuel lorsque l'état « normal » est détecté), ou si le code d'authentification saisi correspond à un code d'authentification obtenu après l'application d'une fonction prédéfinie au code d'authentification actuel (dans ce cas, il y a authentification et le procédé peut comporter une prise en compte de l'état prédéfini, par exemple une mémorisation de l'état prédéfini détecté).

Selon un mode particulier de mise en œuvre, on met en œuvre l'étape r si le code d'authentification actuel diffère du code d'authentification saisi reçu.

Ce mode particulier de mise en œuvre est adapté aux dispositifs pour lesquels l'état prédéfini pour l'état « normal » du dispositif utilise une fonction identité, c'est-à-dire qui ne modifie pas le code d'authentification actuel, ou aux dispositifs qui n'appliquent aucune fonction au code d'authentification actuel lorsque l'état « normal » est détecté. On peut noter que ces dispositifs sont avantageux car ils peuvent fonctionner avec des serveurs tels que ceux décrits dans la méthode définie ci-après mais également avec des serveurs selon la technique antérieure. Ainsi, l'utilisation de l'invention avec de tels dispositifs n'implique pas un remplacement de tous les serveurs susceptibles d'être utilisés avec le dispositif électronique en vue d'une authentification.

Aussi, dans ce mode de mise en œuvre, on ne met en œuvre l'étape r que s'il existe une différence entre le code d'authentification saisi qui a été reçu et le code d'authentification actuel. En fait, si le code d'authentification saisi reçu et le code d'authentification actuel sont différents, soit il s'agit d'une tentative frauduleuse d'authentification, soit il s'agit d'une transmission d'un code d'authentification qui a été modifié pour indiquer que le dispositif électronique se trouve dans un état prédéfini.

Ainsi, on peut noter que ce mode particulier de mise en œuvre est avantageux car il peut fonctionner avec des dispositifs tels que ceux décrits dans le procédé défini ci-avant mais également avec des dispositifs selon la technique antérieure. Selon un mode particulier de mise en œuvre, l'étape r comporte :
- une application de la fonction inverse à ladite fonction prédéfinie au code d'authentification saisi pour obtenir un code d'authentification intermédiaire, et une comparaison du code d'authentification intermédiaire avec le code d'authentification actuel, pour en déduire que le dispositif électronique est dans l'état prédéfini, ou
- une application de la fonction prédéfinie au code d'authentification actuel pour obtenir un code d'authentification modifié, et une comparaison du code d'authentification modifié avec le code d'authentification saisi reçu, pour en déduire que le dispositif est dans l'état prédéfini, ou
- une application d'une fonction intermédiaire au code d'authentification actuel et au code d'authentification saisi pour obtenir un code d'état intermédiaire, et une comparaison du code d'état intermédiaire avec un code d'état associé à l'état prédéfini, pour en déduire que le dispositif électronique est dans l'état prédéfini,
la fonction intermédiaire étant la fonction qui, appliquée au code d'authentification actuel et au code d'état de l'état prédéfini, délivre un code d'authentification qui est le code d'authentification saisi si le dispositif est dans l'état prédéfini.

La détection de l'état prédéfini du dispositif électronique peut être mise en oeuvre de trois manières. La première manière implique qu'il existe une fonction inverse à ladite fonction prédéfinie. En d'autre terme, à un état prédéfini, pour chaque code d'authentification modifié, il existe un unique code d'authentification actuel. Si le code d'authentification intermédiaire correspond au code d'identification actuel, alors on peut à la fois en déduire que le dispositif électronique est dans l'état prédéfini et on peut également authentifier l'utilisateur et/ou le dispositif électronique.

De manière alternative, on peut appliquer la même fonction dans le serveur que celle qui a été appliquée dans le dispositif électronique, et comparer le code d'authentification modifié (par le serveur) obtenu avec le code d'authentification saisi qui a été reçu.

Enfin, selon la troisième manière, on peut utiliser une fonction intermédiaire de type fonction mathématique ou une fonction logique avec un code d'état qui peut être une chaîne de caractères (lettres, chiffres, signes ou symboles ou plusieurs d'entre eux) qui a été choisie préalablement.

Cette troisième variante est très avantageuse avec une fonction intermédiaire du type ou exclusif car l'application du ou exclusif à un code d'état et à un code d'authentification donne un code d'authentification modifié, et l'application du ou exclusif à ce code d'authentification modifié et au code d'authentification non modifié (par exemple le code d'authentification actuel) délivre le code d'état. Cela permet de retrouver facilement l'état prédéfini dans lequel se trouve le dispositif électronique.

Selon un mode particulier de mise en oeuvre, on détecte un état prédéfini parmi une pluralité d'états prédéfinis, chaque état prédéfini de la pluralité d'états prédéfinis étant respectivement associé une fonction prédéfinie.

Ce mode de mise en œuvre permet de détecter plusieurs états prédéfinis. Il est particulièrement adapté à la détection d'états prédéfinis dans des dispositifs électroniques complexes comportant une pluralité de composant.

Par exemple, chaque état prédéfini peut être associé à un code d'état différent. En utilisant la fonction intermédiaire pour mettre en œuvre l'étape r, on peut appliquer cette fonction intermédiaire au code d'authentification actuel et au code d'authentification saisi et le résultat de cette opération peut être l'un des codes d'états (une comparaison avec chaque code d'état enregistré préalablement peut être mise en œuvre).

Ce mode de mise en œuvre est bien adapté à une fonction intermédiaire du type ou exclusif.

Selon un mode particulier de mise en œuvre, on met en œuvre une première fois les étapes p à r à un premier instant, et à un deuxième instant postérieur au premier instant, on répète les étapes p à r, les codes d'authentification actuels étant déterminés au cours des étapes p en tenant compte de l'instant.

Ce mode de mise en œuvre est adapté pour les codes d'authentifications actuels qui sont obtenus en fonction du temps (et donc en tenant compte de l'instant) et pour lesquelles ils existent une synchronisation entre les dispositifs électroniques et les serveurs.

On peut ainsi suivre l'état dans lequel se trouve le dispositif électronique à chaque fois qu'un utilisateur saisi un code d'authentification que le serveur reçoit.

De manière alternative, ce mode de mise en œuvre peut s'adresser à des codes d'authentification actuels qui sont déterminés à un instant qui correspond à la réalisation d'un événement.

Il y a donc ici deux réalisations d'événements prédéfinis espacées dans le temps au premier instant et au deuxième instant. Tenir compte de l'instant peut alors comprendre une étape dans laquelle on tient compte de l'événement prédéfini associé à cet instant.

Par exemple, la réalisation d'un événement peut être la pression d'un bouton du dispositif, ou plus particulièrement la n-ième pression d'un bouton, et tenir compte de l'instant signifie alors tenir compte de n. Un compteur de pressions depuis la remise à l'utilisateur du dispositif électronique peut être utilisé dans le serveur (et, de manière correspondante, un autre compteur peut être utilisé dans le dispositif électronique).

Selon un mode particulier de mise en œuvre, le procédé comprend en outre une mise en oeuvre d'un traitement de sécurité.

Ce traitement de sécurité peut être mis en oeuvre en tenant compte du code d'authentification saisi, ou encore en tenant compte de l'état prédéfini qui a été détecté.

Selon un mode particulier de mise en oeuvre, si à une pluralité d'instants consécutifs on détecte des états prédéfinis du dispositif qui sont consécutivement différents, alors on met en œuvre ledit traitement de sécurité.

Ainsi, si l'on observe qu'un dispositif électronique passe d'un état prédéfini à un autre état prédéfini entre deux mises en œuvre du procédé, alors on peut effectuer une action appropriée telle qu'un traitement de sécurité.

L'homme du métier saura choisir quel traitement de sécurité appliquer, en fonction notamment de la différence entre les états prédéfinis observés, et de l'application.

Selon un mode particulier de mise en œuvre, le traitement de sécurité est mis en œuvre si au moins deux desdits états prédéfinis détectés successivement forment un couple prédéfinis d'états incompatibles successivement.

Dans ce mode de mise en œuvre, on peut par exemple détecter qu'un dispositif électronique se trouve dans un état ultérieur qui n'est pas compatible avec l'état antérieur. Par exemple, si un dispositif électronique est dans un état dans lequel il présente une défaillance de batterie, ce dispositif électronique ne peut normalement plus se trouver dans un état dans lequel il présente un fonctionnement normal. La détection de deux états successifs incompatibles, peut notamment indiquer une tentative d'authentification frauduleuse. L'homme du métier saura établir des couples d'états incompatibles successivement.

Selon un mode particulier de mise en œuvre, le traitement de sécurité comporte une demande, par le serveur, d'un nouveau code d'authentification.

Ce mode de mise en œuvre est particulièrement adapté pour les dispositifs électroniques équipés d'un bouton pour obtenir un nouveau code d'authentification (par exemple un jeton d'authentification). Le serveur pourra ainsi vérifier que le nouveau code d'authentification saisi par l'utilisateur permet de détecter que le dispositif électronique est toujours dans le même état prédéfini.

On peut noter qu'après la demande du nouveau code d'authentification, le procédé de gestion d'un dispositif électronique mis en œuvre par un serveur peut également comporter une étape d'authentification ultérieure de l'utilisateur. Cette authentification ultérieure tient compte du nouveau code d'authentification saisi et de la détection de l'état prédéfini.

On notera que cette authentification ultérieure de l'utilisateur peut n'être obtenue que si le même état prédéfini est détecté après la saisie du nouveau code d'authentification.

Aussi, dans la présente demande, si l'authentification est réalisée dans le cadre d'une transaction bancaire, alors la réussite de l'authentification ultérieure de l'utilisateur conduit à la validation de la transaction bancaire.

Selon un mode particulier de mise en œuvre, le traitement de sécurité comporte un envoi par le serveur d'un code d'authentification supplémentaire à un terminal de l'utilisateur distinct du dispositif électronique, et une réception d'un code d'authentification supplémentaire saisi par l'utilisateur.

De la même manière, le code d'authentification supplémentaire peut permettre une authentification ultérieure de l'utilisateur. L'authentification ultérieure de l'utilisateur ne peut être obtenue que si le code d'authentification supplémentaire saisi par l'utilisateur est le même que le code d'authentification supplémentaire envoyé par le serveur au terminal de l'utilisateur.

Aussi, si l'authentification est réalisée dans le cadre d'une transaction bancaire, alors la réussite de l'authentification ultérieure de l'utilisateur conduit à la validation de la transaction bancaire.

Ce mode de mise en œuvre permet de sécuriser d'avantage le procédé. L'envoi par le serveur peut être par exemple mis en œuvre par envoi d'un message de type SMS vers un terminal de l'utilisateur.

Selon un mode particulier de mise en œuvre, le traitement de sécurité comporte en outre l'envoi d'une communication à une entité émettrice du dispositif électronique.

Ce traitement de sécurité peut être mis en œuvre, par exemple, si un même état prédéfini a été détecté lors de détections successives un nombre prédéfini de fois.

L'entité émettrice du dispositif électronique peut par exemple être une banque, dans le cas où le dispositif électronique est une carte bancaire.

Selon un mode particulier de mise en œuvre, le serveur authentifie le dispositif électronique si l'état prédéfini du dispositif électronique est compris dans une liste d'états prédéfinis autorisés.

On pourra ainsi refuser l'authentification d'un dispositif électronique qui est dans un état dans lequel il est peu probable que le dispositif électronique se trouve.

Selon un mode particulier de mise en œuvre, ladite liste d'états prédéfinis autorisés varie en fonction du temps.

Ce mode de mise en œuvre permet de tenir compte des défaillances qui sont plus probables quand un dispositif électronique est vieillissant. Par exemple, les défaillances liées aux batteries sont particulièrement rares lors de la mise en service d'un dispositif électronique, mais elles sont fréquentes quand un dispositif électronique a un âge de l'ordre de deux ans.

On notera que ce mode de mise en œuvre s'applique à la fois aux dispositifs qui élaborent des codes d'authentification à partir d'une durée (par exemple depuis la remise du dispositif à l'utilisateur) ou encore aux dispositifs qui élaborent des codes d'authentifications à la réalisation d'un événement. En effet, les n-ièmes pressions d'un bouton utilisé pour générer un code sont nécessairement effectuées plus tard dans la durée de vie du dispositif que les premières pressions. Dès lors, pour ces dispositifs, le temps est estimé en fonction du nombre de pressions.

Selon un mode particulier de mise en œuvre, l'étape p comprend l'obtention d'une première pluralité de codes d'authentification actuels chacun associé à une fenêtre, l'étape r étant mise en œuvre pour au moins un code d'authentification actuel (ou chaque) de la première pluralité de codes d'authentification actuels, et
si l'état prédéfini détecté au premier instant et au deuxième instant est un état dans lequel un module de détermination de l'instant (le module qui va déterminer que le premier instant ou que le deuxième instant est atteint) du dispositif électronique est défaillant, alors pour les instants ultérieurs l'étape p comprend l'obtention d'une deuxième pluralité de codes d'authentification actuels chacun associé à une fenêtre, la deuxième pluralité ayant un cardinal plus élevé que la première pluralité.

Le module de détermination de l'instant peur être une horloge du dispositif, un bouton (l'instant est une pression de ce bouton), ou encore un capteur qui détecte la réalisation d'un événement.

Par exemple, en obtenant une information sur une défaillance de l'horloge du dispositif électronique, on peut s'assurer que l'authentification du dispositif électronique sera effectuée, car on observe un nombre plus élevé de fenêtres.

L'invention concerne également un dispositif électronique associé à un utilisateur comprenant :
- un module d'obtention d'un code d'authentification actuel,
- un module de détection d'un état prédéfini du dispositif électronique,
- un module d'application au code d'authentification actuel d'une fonction prédéfinie associée à l'état prédéfini, pour obtenir un code d'authentification modifié, et
- un module de délivrance du code d'authentification modifié à l'utilisateur

Ce dispositif peut être configuré pour la mise en œuvre de tous les modes de mise en œuvre du procédé de gestion d'un dispositif électronique mis en œuvre par le dispositif électronique tel que décrit ci-avant.

L'invention concerne également un serveur de gestion d'un dispositif électronique associé à un utilisateur, comprenant :
- un module d'obtention d'un code d'authentification actuel,
- un module de réception d'un code d'authentification saisi associé au dispositif électronique,
- un module de détection d'un état prédéfini du dispositif électronique à partir du code d'authentification actuel et du code d'authentification saisi, si le code d'authentification saisi peut être obtenu par une application au code d'authentification actuel d'une fonction prédéfinie associée à l'état prédéfini.

Ce serveur peut être configuré pour la mise en œuvre de tous les modes de mise en œuvre du procédé de gestion d'un dispositif électronique mis en œuvre par un serveur tel que défini ci-avant.

L'invention propose également un programme d'ordinateur comportant des instructions pour l'exécution des étapes d'un procédé (mis en œuvre par un dispositif électronique) tel que défini ci-avant lorsque ledit programme est exécuté par un ordinateur.

L'invention propose également un programme d'ordinateur comportant des instructions pour l'exécution des étapes d'un procédé (mis en œuvre par un serveur) tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé (mis en œuvre par un dispositif électronique) tel que défini ci-avant.

L'invention propose également un support d'enregistrement lisible par un ordinateur sur lequel est enregistré un programme d'ordinateur comprenant des instructions pour l'exécution des étapes d'un procédé (mis en œuvre par un serveur) tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente de manière schématique un exemple des étapes de procédés mis en œuvre par un dispositif électronique et par un serveur,
- la figure 2 représente de manière schématique un exemple de dispositif électronique,
- la figure 3 représente sur deux axes les codes d'authentification actuels du dispositif électronique et du serveur,
- les figures 4A et 4B représentent de manière schématique des exemples de serveurs,
- les figures 5A et 5B sont des exemples de modes de réalisations de dispositifs électroniques,
- les figures 6A, 6B, 6C, et 6D représentent des modes d'affichages de codes d'authentification,
- la figure 7 représente la détection d'un état conduisant à un traitement de sécurité,
- la figure 8 représente également la détection d'un état conduisant à un traitement de sécurité.

### Description détaillée de plusieurs modes de réalisation

La présente invention se rapporte au domaine des dispositifs électroniques qui sont capables d'obtenir des codes d'authentifications et de les délivrer à des utilisateurs. Ces codes d'authentifications peuvent par exemple être saisis sur des interfaces de sites internet de serveurs d'authentification en vue de l'authentification de l'utilisateur ou de son dispositif électronique, le dispositif électronique étant associé à un utilisateur.

La présente invention trouve notamment application dans les transactions financières effectuées par des cartes bancaires à distance (par exemple sur internet ou par téléphone).

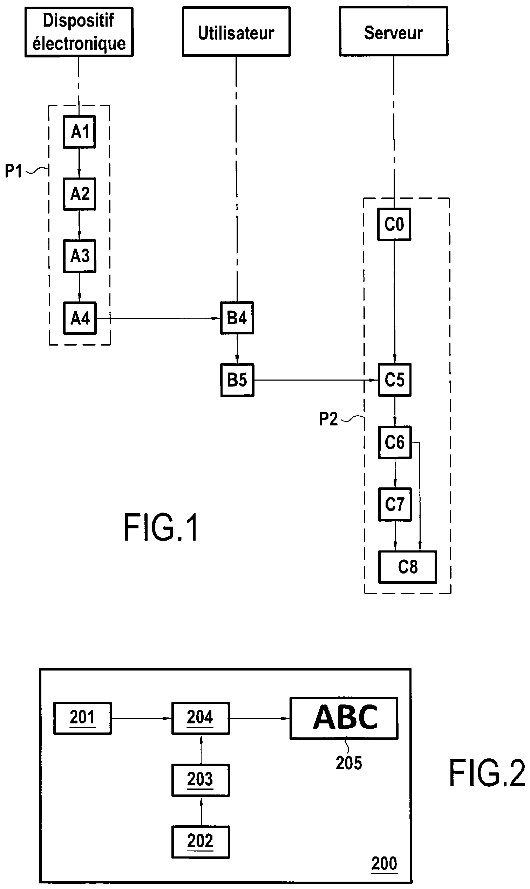

Sur la figure 1 on a représenté schématiquement les étapes de deux procédés : un premier procédé P1 mis en oeuvre par un dispositif électronique, par exemple une carte bancaire, et un deuxième procédé P2 mis en oeuvre par un serveur, par exemple un serveur d'authentification qui va recevoir des codes d'authentifications saisis par un utilisateur pour authentifier l'utilisateur.

Dans une première étape A1 le dispositif électronique obtient un code d'authentification actuel. Cette étape peut comporter l'application d'une fonction cryptographique, qui reçoit en entrée des paramètres du dispositif électronique et également une information temporelle provenant d'une horloge du dispositif électronique.

Une alternative à l'information temporelle peut également être utilisée, et cette alternative consiste en un nombre d'occurrences d'un événement prédéterminé, par exemple le nombre de fois qu'il y a eu un appui sur le bouton du dispositif depuis la remise dudit dispositif à l'utilisateur.

Le code d'authentification actuel peut comporter une pluralité de caractères, éventuellement uniquement des chiffres, par exemple trois chiffres (comme par exemple un code CW dynamique).

Dans une étape A2 le dispositif électronique détecte un état prédéfini du dispositif électronique. Par exemple, un état prédéfini peut être choisi dans le groupe comprenant un état de fonctionnement normal, un état dans lequel une batterie du dispositif électronique est défaillante, un état dans lequel une mémoire du dispositif électronique est défaillante, un état dans lequel un module de détermination de l'instant du dispositif électronique est défaillant, et un état dans lequel le dispositif électronique a atteint une valeur de température prédéfinie. Bien entendu l'homme du métier pourra retirer des états de cette liste et/ou y ajouter d'autres états prédéfinis, en fonction de l'application.

On notera cependant que cette liste d'états prédéfinis est particulièrement bien adaptée aux dispositifs électroniques de type cartes bancaire.

Aussi, plusieurs états prédéfinis peuvent être détectables simultanément. Par exemple, une batterie défaillante et une mémoire défaillante sont deux états qui ne sont pas incompatibles.

Le dispositif électronique met ensuite en œuvre l'étape A3 dans laquelle il applique au code d'authentification actuel obtenu dans l'étape A1 une fonction prédéfinie associée à l'état prédéfini qui a été détecté dans l'étape A2. On obtient ainsi un code d'authentification modifié.

Si, par exemple, deux états (ou plus) ont été détectés simultanément, alors on peut appliquer une fonction prédéfinie associée à ces deux états. Ainsi, s'il a été détecté que le dispositif présente une batterie défaillante et une mémoire défaillante, on peut utiliser une fonction prédéfinie associée à la combinaison de ces deux états.

Ensuite on met en œuvre l'étape A4 dans laquelle on délivre le code d'authentification modifié obtenu à l'étape A3 à l'utilisateur. Si le dispositif électronique est muni d'un écran d'affichage, la délivrance peut comporter l'affichage sur cet écran d'affichage du code d'authentification modifié. De manière alternative, le code d'authentification modifié peut être délivré à l'utilisateur au moyen d'un signal audio, ou encore par l'affichage d'un code unidimensionnel ou bidimensionnel tel qu'un code-barres ou QR code dans lequel est codé le code d'authentification modifié.

L'utilisateur intervient ensuite en prenant connaissance du code qui lui a été délivré au cours de l'étape B4. Typiquement, l'utilisateur va prendre connaissance du code qui a été délivré lorsqu'il souhaite s'authentifier sur un serveur. A cet effet, l'utilisateur met en œuvre l'étape B5 dans laquelle il saisit le code d'authentification sur une interface d'un site internet du serveur.

Du côté du serveur une étape C0 a préalablement été mise en œuvre dans laquelle on obtient un code d'authentification actuel. On peut noter que si le dispositif électronique et le serveur sont synchronisés dans le temps alors, préférentiellement, l'étape A1 d'obtention du code d'authentification actuel mise en œuvre par le dispositif électronique est mise en œuvre de manière sensiblement simultanée avec l'étape C0 d'obtention du code d'authentification actuel par le serveur. Au cours de l'étape C5 le serveur reçoit le code d'authentification qui a été saisi par l'utilisateur au cours de l'étape B5. Comme on le conçoit, cet exemple ne concerne que les dispositifs électroniques qui utilisent une information temporelle de type durée pour élaborer des codes d'authentification.

L'étape C6 est ensuite mise en œuvre dans laquelle on compare le code d'authentification saisi par l'utilisateur reçu à l'étape C5 avec le code d'authentification actuel de l'étape C0. Si le code d'authentification actuel diffère du code d'authentification qui a été reçu, alors on peut mettre en œuvre l'étape C7 dans laquelle on détecte un état prédéfini du dispositif électronique. Si par contre l'étape C6 montre que le code d'authentification saisi par l'utilisateur et le code d'authentification actuel sont identiques alors on peut directement mettre en œuvre l'étape C8 d'authentification du dispositif électronique (ou de l'utilisateur, ce qui est équivalent ici). On comprend que si le code d'authentification actuel est identique au code d'authentification saisi, cela peut impliquer qu'un état prédéfini dit « normal » est détecté et que l'utilisateur pourra, in fine, être authentifié.

On peut noter que l'étape C6 est particulièrement bien adaptée aux dispositifs pour lesquels l'état prédéfini pour l'état « normal » du dispositif utilise une fonction identité, c'est-à-dire qui ne modifie pas le code d'authentification actuel, ou aux dispositifs qui n'appliquent aucune fonction au code d'authentification actuel lorsque l'état « normal » est détecté.

Comme on le conçoit, si l'état « normal » est associé à une fonction prédéfinie qui va modifier le code d'authentification actuel, alors l'étape C6 n'est pas mise en œuvre et l'étape C7 est mise en œuvre directement après l'étape C5.

Dans l'étape C7, on a utilisé à la fois le code d'authentification actuel et le code d'authentification saisi, pour détecter qu'une fonction prédéfinie associée à un état prédéfini du dispositif électronique a été appliqué au code d'authentification actuel dans le dispositif électronique.

Dans l'exemple décrit ci-dessus, on tient compte d'une information temporelle (un instant) pour élaborer les codes d'authentification. La mise en œuvre de toutes les étapes A1 à A4, B4 et B5, et C0 à C8 peut donc être répétée avec des informations temporelles différentes et donc à des instants différents. Par exemple, cette mise en œuvre peut être effectuée toutes les heures pour le dispositif, et toute les heures ou à réception du code d'authentification saisi par l'utilisateur pour le serveur.

Dans le cas de l'alternative où on utilise un nombre d'occurrences d'un événement, alors on peut répéter ces étapes à chaque occurrence de l'événement. Par exemple, cette mise en œuvre peut être effectuée à chaque appui sur un bouton du dispositif pour le dispositif, et à réception du code d'authentification saisi par l'utilisateur pour le serveur. On notera que pour cette alternative, l'étape C0 peut être mis en œuvre avec l'étape C5, c'est-à-dire à la réception par le serveur du code saisi par l'utilisateur.

La figure 2 est une représentation schématique d'un dispositif électronique 200 selon un exemple de réalisation. Le dispositif électronique 200 comporte un premier module d'obtention d'un code d'authentification actuel 201, capable de mettre en œuvre l'étape A1 telle que décrite en référence à la figure 1.

Le dispositif électronique 200 comporte également un module 202 de détection d'un état prédéfini du dispositif électronique, et qui est donc apte à mettre en œuvre l'étape A2 telle que décrite en référence à la figure 1. Le module 202 peut détecter un état prédéfini compris dans une pluralité d'états prédéfinis de la carte et dans cet exemple chaque état prédéfini est associé à un code d'état. A cet effet le dispositif électronique 200 est équipé d'un module 203 d'attribution d'un code d'état à un état prédéfini qui a été détecté par le module 202. Par exemple le module 203 peut attribuer un chiffre ou plusieurs chiffres à chaque état prédéfini.

Pour obtenir des codes d'authentifications modifiés (et donc mettre en œuvre l'étape A3 décrite en référence à la figure 1) le dispositif électronique 200 comporte un module 204 d'application au code d'authentification actuel d'une fonction prédéfinie associée à l'état prédéfini qui a été détecté, pour obtenir un code d'authentification modifié. Ici on utilise une même fonction pour tous les états prédéfinis, mais le code d'état fourni par le module 203 permettra de coder différents états prédéfinis dans le code d'authentification modifié. A titre indicatif, la fonction qui est implémentée par le module 204 peut être la fonction ou exclusif.

Le code d'authentification modifié obtenu au moyen du module 204 est fourni à un module de délivrance du code d'authentification modifié à l'utilisateur. Le module 205 affiche ici trois caractères ABC. En fait, le module 205 est un écran du dispositif électronique 200.

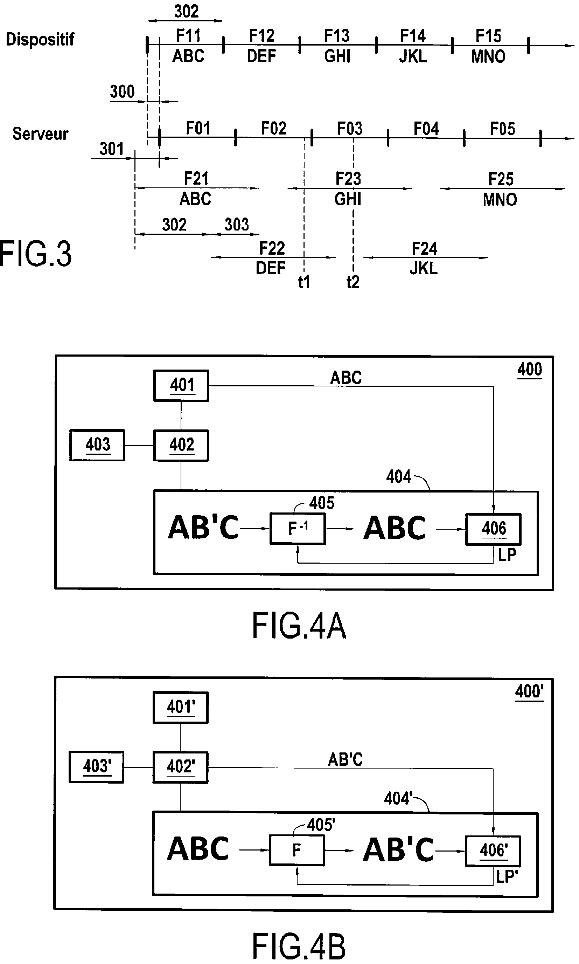

La figure 3 illustre sur deux axes des temps les codes d'authentifications actuels qui seront obtenus d'une part par le dispositif (sur un premier axe des temps) et d'autre part au niveau du serveur (sur un deuxième axe des temps). À un premier instant le dispositif obtient le code d'authentification ABC, c'est ce code qui sera affiché par le dispositif électronique, sauf s'il doit être modifié compte-tenu d'un état prédéfini détecté du dispositif électronique. Le code ABC sera par exemple affiché sur un écran du dispositif électronique pendant une première fenêtre temporelle F11. Ensuite dans la fenêtre temporelle F12 le code d'authentification actuel obtenu est DEF, dans la fenêtre temporelle F13 le code d'authentification actuel obtenu est GHI, dans la fenêtre temporelle F14 le code d'authentification actuel obtenu est JKL, et enfin, dans la fenêtre temporelle F15 le code d'authentification actuel obtenu est MNO. Les fenêtres temporelles F11, F12, F13, F14, et F15 ont une durée notée 302.

Le dispositif électronique et le serveur ne sont pas parfaitement synchronisés dans l'exemple illustré sur cette figure. Ici, un décalage temporel 300 est présent entre une référence temporelle du dispositif électronique (par exemple une horloge du dispositif) et une référence temporelle du serveur (par exemple une horloge du serveur). De ce fait, on observe le décalage temporel 300 entre le premier instant des fenêtres temporelles F11, F12, F13, F14 et F15 du dispositif électronique et le premier instant des fenêtres temporelles correspondantes F01, F02, F03, F04 et F05 côté serveur.

La valeur du décalage 300 peut ne pas être connue, ni mesurable par le serveur. De ce fait, en utilisant un code d'authentification actuel par fenêtre F01 à F05, l'authentification de l'utilisateur peut échouer.

Pour tenir compte du décalage 300, un autre décalage temporel 301 peut être introduit entre la référence temporelle du serveur et le premier instant des fenêtres temporelles supplémentaires utilisées par le serveur F21, F 22, F23, F24, F25. Les fenêtres temporelles supplémentaires utilisées par le serveur F21, F 22, F23, F24, F25 peuvent également avoir une longueur temporelle supérieure à celle des fenêtres utilisées du côté du dispositif F11, F12, F13, F14 et F15. Dans l'exemple illustré, les fenêtres utilisées côté serveur sont plus longues que celles utilisées côté dispositif électronique, d'une durée notée 303.

De cette manière, le serveur obtient un code d'authentification actuel, et il peut accepter le code d'authentification actuel de la fenêtre précédente, car ces fenêtres se chevauchent.

Le décalage 301 et la durée 303 sont choisis de manière à couvrir les décalages 300 possibles des dispositifs électroniques qui sont en état de fonctionnement normal.

Ainsi, dans la première fenêtre temporelle supplémentaire F21, le serveur obtient le code d'authentification actuel ABC. Ensuite dans la fenêtre temporelle supplémentaire F22, le serveur obtient le code d'authentification actuel DEF, dans la fenêtre temporelle supplémentaire F23 le serveur obtient le code d'authentification actuel GHI, dans la fenêtre temporelle supplémentaire F24 le serveur obtient le code d'authentification actuel JKL, et enfin, dans la fenêtre temporelle supplémentaire F25 le serveur obtient le code d'authentification actuel MNO.

Dans l'exemple illustré, à l'instant t1, le serveur obtient le code d'authentification actuel GHI et accepte le code d'authentification actuel DEF de la fenêtre précédente, tandis qu'à l'instant t2, le serveur obtient le code d'authentification actuel GHI et n'accepte plus le code d'authentification actuel DEF de la fenêtre précédente. En fait, à l'instant t1, le serveur a obtenu deux codes d'authentifications actuels et il peut mettre en oeuvre les étapes C5 à C8 avec DEF et GHI.

On peut noter que si un état prédéfini du dispositif électronique est un état dans lequel une horloge du dispositif électronique est défaillante, alors pour les instants ultérieurs le serveur peut obtenir (et accepter) plus que deux codes d'authentification actuels, par exemple 3 codes d'authentification actuels. Ceci peut être obtenu en augmentant la durée 303 de sorte que trois fenêtres supplémentaires puissent se chevaucher.

Par ailleurs, l'exemple de la figure 3 peut être implémenté avec un dispositif qui utilise le nombre de pressions d'un bouton pour générer des codes d'authentification.

Le décalage temporel 300 correspondrait alors à un écart entre le nombre d'événements côté serveur et côté dispositif (par exemple, l'utilisateur ayant appuyé à plusieurs reprises sur le bouton de son dispositif sans avoir saisi les codes d'authentification actuels ainsi obtenus).

Le décalage 301 et les durées 303 correspondraient alors à un nombre de codes d'authentification saisis reçus par le serveur pour ce dispositif.

La figure 4A illustre de manière schématique un serveur 400, par exemple un serveur apte à mettre en œuvre les états C0 à C8 décrites en référence à la figure 1. Le serveur 400 peut donc être un serveur d'authentification d'un dispositif électronique, par exemple un serveur d'authentification qui est utilisé pour mettre en œuvre des transactions financières.

Le serveur 400 comporte un premier module 401 d'obtention d'un code d'authentification actuel, ce module est apte à mettre en œuvre l'étape C0 de la figure 1. Le serveur 400 comporte en outre un module 402 de réception d'un code d'authentification saisi, et pour recevoir les codes d'authentifications saisis le serveur 400 comporte des moyens de communication 403, par exemple un accès à un réseau de type internet.

Le serveur 400 comprend un module de détection 404 d'un état prédéfini du dispositif électronique à partir d'un code d'authentification actuel et d'un code d'authentification saisi, si le code d'authentification saisi peut être obtenu par une application au code d'authentification actuel d'une fonction prédéfinie associée à l'état prédéfini du dispositif électronique. Par exemple, si le code d'authentification saisi qui a été reçu se note AB'C, alors on peut détecter un état prédéfini en appliquant la fonction inverse notée F⁻¹ dans un sous module 405 du module de détection 404, cette fonction inverse permet d'obtenir un code d'authentification intermédiaire noté ABC.

Le code ABC est comparé par un sous module 406 au code d'authentification actuel obtenu par le module 401 (la fourniture du code d'authentification actuel est représentée au moyen d'une flèche). Si le code d'authentification intermédiaire ABC est identique au code d'authentification actuel obtenu par le module 401, alors l'état prédéfini du dispositif électronique qui est associé à la fonction mis en œuvre par le module 405 a été détecté.

Le mode de réalisation de la figure 4A est implémentable dès lors qu'à un état prédéfini, la fonction utilisée pour modifier les codes dans le dispositif électronique est une fonction bijective pour laquelle il existe une fonction inverse.

On peut noter que le module de détection 404 est configuré pour la mise en oeuvre de l'étape C7 décrite en référence à la figure 1.

Aussi, la fonction inverse F⁻¹ est associée à un seul état prédéfini (ou éventuellement à plusieurs états prédéfinis qui peuvent être détectés simultanément pour lesquels il existe une fonction prédéfinie associée).

Pour détecter d'autres états prédéfinis, on utilise une boucle LP qui va réutiliser le sous-module 405 avec une fonction inverse associée à un autre état prédéfini et réutiliser le sous-module 406 pour mettre en œuvre une nouvelle comparaison. La boucle LP peut être utilisée jusqu'à ce qu'un état prédéfini soit détecté, ou, alternativement, elle peut être utilisée pour tous les états prédéfinis.

En fait, la boucle LP est utilisée au moyen d'une liste de fonctions inverse toutes associées à un état prédéfini. Cette liste de fonctions inverses toutes associées à des états prédéfinis est donc enregistrée dans le serveur. Lorsqu'un code d'authentification saisi est reçu, on peut préférentiellement tester en premier dans le sous-module 405 la fonction inverse associée à l'état prédéfini qui a été détecté à partir du précédent code d'authentification saisi reçu par le serveur, puis parcourir la liste.

L'étape C7 décrite en référence à la figure 1 peut donc comporter une répétition d'une détection pour chaque état prédéfini.

La figure 4B présente un mode de réalisation alternatif d'un serveur 400'. Le serveur 400' comporte un premier module 401' d'obtention d'un code d'authentification actuel, un module 402' de réception d'un code d'authentification saisi, des moyens de communication 403', et enfin un module 404' de détection d'un état prédéfini du dispositif électronique. Les modules 401' 402' et 403' sont analogues aux modules 401 402 et 403 décrits en référence à la figure 4A.

Ici, dans le module 404', à partir du code d'authentification actuel ABC obtenu par le module 401', on va appliquer la même fonction notée F que celle qui a pu être appliquée dans un dispositif électronique. Cette application est mise en œuvre par un sous module 405'. On obtient ainsi un code d'authentification modifié AB'C qui peut être comparé dans un sous module 406' au code d'authentification saisi qui a été reçu par le module 402'. Si le code d'authentification modifié AB'C est identique au code d'authentification qui a été reçu par le module 402', alors l'état prédéfini du dispositif électronique qui est associé à la fonction mis en œuvre par le module 405' a été détecté.

On peut noter que le module de détection 404' est également configuré pour la mise en œuvre de l'étape C7 décrite en référence à la figure 1.

Aussi, la fonction prédéfinie F est associée à un seul état prédéfini (ou éventuellement à plusieurs états prédéfinis qui peuvent être détectés simultanément pour lesquels il existe une fonction prédéfinie associée).

Pour détecter d'autres états prédéfinis, on utilise une boucle LP' qui va réutiliser le sous-module 405' avec une fonction associée à un autre état prédéfini et réutiliser le sous-module 406' pour mettre en œuvre une nouvelle comparaison. La boucle LP' peut être utilisée jusqu'à ce qu'un état prédéfini soit détecté, ou, alternativement, elle peut être utilisée pour tous les états prédéfinis.

En fait, la boucle LP' est utilisée au moyen d'une liste de fonctions toutes associées à un état prédéfini. Cette liste de fonctions toutes associées à des états prédéfinis est donc enregistrée dans le serveur. Lorsqu'un code d'authentification saisi est reçu, on peut préférentiellement tester en premier dans le sous-module 405' la fonction associée à l'état prédéfini qui a été détecté à partir du précédent code d'authentification saisi reçu par le serveur, puis parcourir la liste.

L'étape C7 décrite en référence à la figure 1 peut donc comporter une répétition d'une détection pour chaque état prédéfini.

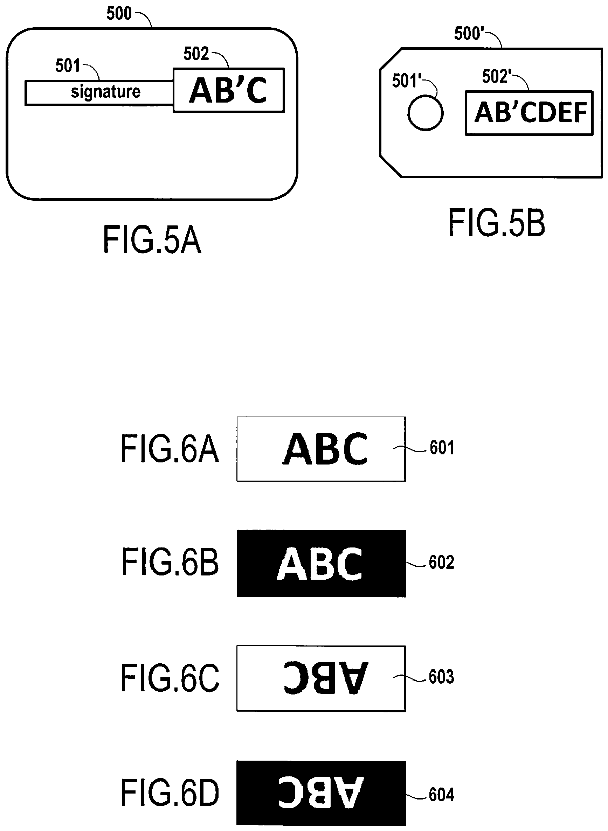

La figure 5A représente une carte bancaire 500 dont le dos a été représenté. La carte bancaire 500 comprend une zone 501 dans laquelle un utilisateur peut mettre sa signature et un écran 502 sur lequel on a affiché un code d'authentification modifié AB'C.

La figure 5B représente un jeton d'authentification 500', ce qui correspond à un mode de réalisation alternatif de l'invention. Un tel jeton 500' peut être utilisé pour accéder à des services sur internet, par exemple pour accéder à un service de messagerie.

Le jeton d'authentification 500' comporte un bouton 501' qui peut être pressé pour obtenir un nouveau code d'authentification affiché sur un écran 502'. En fait, le jeton peut comporter un compteur de pressions du bouton et la valeur associée au compteur peut être utilisée pour la génération de codes d'authentification actuels.

Dans l'exemple illustré sur la figure 5B, l'écran 502' affiche un code à six caractères AB'CDEF.

On peut noter qu'un unique caractère a été modifié dans cet exemple. Cela étant, on peut concevoir (pour ce mode de réalisation ou tous les autres de la présente description) une fonction prédéfinie qui modifie le code pour obtenir un code A'B'C'D'E'F', ou « ' » indique que le caractère a été modifié par la fonction.

Pour augmenter la sécurité des procédés tels que décrits ci-avant, on peut modifier plusieurs caractères de la chaîne de caractère du code d'authentification actuel, voire tous les caractères. Ainsi, on évite qu'une erreur sur un caractère lors de la saisie du code ne soit considérée du côté du serveur comme un autre état prédéfini.

Pour également augmenter la sécurité des procédés tels que décrits ci avant, lorsque des états prédéfinis particuliers ont été détectés par des dispositifs électroniques, et lorsque ces dispositifs électroniques comportent des écrans, on peut modifier l'affichage du code d'authentification modifié. Par exemple, la figure 6A montre l'affichage dit normal d'un code ABC sur un écran 601, la figure 6B montre l'affichage du même code ABC sur un écran 602, mais ici l'affichage est fait de manière à obtenir un négatif de l'affichage obtenu dans le mode de réalisation de la figure 6A.

Sur la figure 6C on a représenté un affichage 603 dans lequel le code ABC est inversé. Sur la figure 6D le code ABC est inversé de la même manière que sur la figure 6C, mais on affiche un négatif sur l'écran 604 de ce qui était obtenu sur l'écran 603 de la figure 6C.

Ces quatre modes d'affichage peuvent être utilisés en fonction de l'état prédéfini dans lequel est le dispositif électronique. Si un serveur est utilisé pour recevoir des codes d'authentifications saisis, ce serveur peut demander à l'utilisateur (au moyen d'une interface) quel est le mode d'affichage du code sur son dispositif électronique. Ceci peut permettre de confirmer, du côté du serveur, l'état du dispositif électronique. En fait, cela permet de vérifier qu'une erreur de saisie n'indique pas un état particulier du dispositif électronique.

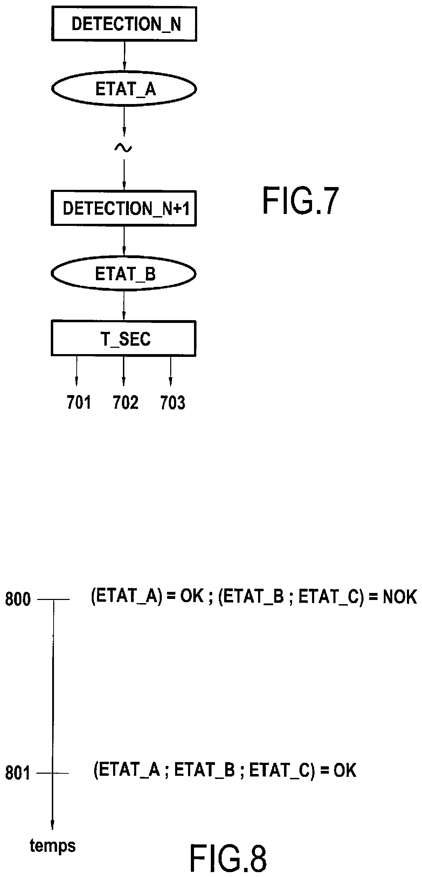

Sur la figure 7, on a représenté un exemple de détection d'un état prédéfini qui conduit à la mise en œuvre d'un traitement de sécurité. Ces étapes sont mises en œuvre par un serveur notamment tel que décrit ci-avant.

Dans une première étape DETECTION_N (il s'agit de la N-ième détection), on détecte un état prédéfini du dispositif électronique, par application d'un des procédés tel que décrit ci-avant, avec n'importe lequel des dispositifs électroniques décrits-ci-avant. L'état détecté est l'état ETAT_A.

Ultérieurement, lors de la mise en œuvre de la N+1-ième détection (notée DETECTION-N+1), on détecte un état ETAT_B qui diffère de ETAT_A.

La détection consécutive de deux états prédéfinis différents conduit à la mise en œuvre d'un traitement de sécurité T_SEC. Dans un mode de mise en œuvre, T_SEC est mis en œuvre uniquement si ETAT_A et ETAT_B sont des états qui sont incompatibles (l'homme du métier saura déterminer quels états sont incompatibles entre eux pour un même dispositif électronique).

Le traitement de sécurité peut être mis en œuvre de plusieurs façons :
- 701 : Demande par le serveur d'un nouveau code d'authentification (par exemple plus tard ou après une nouvelle pression d'un bouton) ;
- 702 : Envoi par le serveur d'un code d'authentification supplémentaire sur un terminal de l'utilisateur (par exemple un téléphone) pour que l'utilisateur saisisse ce code d'authentification supplémentaire ;
- 703 : Envoi d'une communication à une entité émettrice du dispositif électronique, par exemple une banque si le dispositif électronique est une carte bancaire.

Bien entendu, la liste 701 à 703 n'est pas exhaustive et d'autres traitements de sécurité sont envisageables.

Sur la figure 8, on a représenté un autre exemple mis en œuvre par un serveur et dans lequel on peut déclencher un traitement de sécurité.

A l'instant 800, le dispositif électronique est remis à l'utilisateur. Deux listes sont mémorisées par le serveur :
- Une première liste d'états acceptables comprenant : ETAT_A
- Une deuxième liste d'états inacceptables à l'instant 800 comprenant : ETAT_B, ETAT_C.

Par exemple, ETAT_A peut correspondre à un fonctionnement normal et si un autre état est détecté à la remise du dispositif à l'utilisateur alors on met en œuvre un traitement de sécurité.

Ultérieurement, à l'instant 800 (par exemple deux ans après la remise à l'utilisateur du dispositif), la liste d'états inacceptables est vide tandis que la liste d'états acceptables comprend tous les états : ETAT_A, ETAT_B, et ETAT_C.

Avant d'atteindre l'instant 801, certains états (par exemple ceux relatifs à une défaillance de batterie) sont peu probables. S'ils sont détectés, c'est peut-être parce qu'un utilisateur malveillant essaye de deviner le code d'authentification.

L'utilisation de ces deux listes qui évoluent dans le temps permet donc de sécuriser le procédé.

## Revendications

1. Procédé de gestion d'un dispositif électronique associé à un utilisateur et mis en œuvre par un serveur, comprenant :
p- une obtention (C0) d'un code d'authentification actuel,
q- une réception (C5) d'un code d'authentification saisi associé au dispositif électronique,
r- une détection (C7) d'un état prédéfini du dispositif électronique à partir du code d'authentification actuel et du code d'authentification saisi, si le code d'authentification saisi peut être obtenu par une application au code d'authentification actuel d'une fonction prédéfinie associée à l'état prédéfini,
dans lequel on met en œuvre une première fois les étapes p à r à un premier instant, et à un deuxième instant postérieur au premier instant, on répète les étapes p à r, les codes d'authentification actuels étant déterminés au cours des étapes p en tenant compte de l'instant,
l'étape p comprend l'obtention d'une première pluralité de codes d'authentification actuels chacun associé à une fenêtre, l'étape r étant mise en œuvre pour au moins un code d'authentification actuel de la première pluralité de codes d'authentification actuels, et **caractérisé en ce que** si l'état prédéfini détecté au premier instant ou au deuxième instant est un état dans lequel un module de détermination de l'instant du dispositif électronique est défaillant, alors pour des instants ultérieurs l'étape p comprend l'obtention d'une deuxième pluralité de codes d'authentification actuels chacun associé à une fenêtre, la deuxième pluralité ayant un cardinal plus élevé que la première pluralité.

2. Procédé selon la revendication 1, comprenant en outre une comparaison du code d'authentification actuel avec le code d'authentification saisi reçu.

3. Procédé selon la revendication 2, dans lequel dans lequel on met en œuvre l'étape r si le code d'authentification actuel diffère du code d'authentification saisi reçu.

4. Procédé selon l'une quelconque des revendications 1 à 3, dans lequel l'étape r comporte :
- une application de la fonction inverse à ladite fonction prédéfinie au code d'authentification saisi pour obtenir un code d'authentification intermédiaire, et une comparaison du code d'authentification intermédiaire avec le code d'authentification actuel, pour en déduire que le dispositif électronique est dans l'état prédéfini, ou
- une application de la fonction prédéfinie au code d'authentification actuel pour obtenir un code d'authentification modifié, et une comparaison du code d'authentification modifié avec le code d'authentification saisi reçu, pour en déduire que le dispositif est dans l'état prédéfini, ou
- une application d'une fonction intermédiaire au code d'authentification actuel et au code d'authentification saisi pour obtenir un code d'état intermédiaire, et une comparaison du code d'état intermédiaire avec un code d'état associé à l'état prédéfini, pour en déduire que le dispositif électronique est dans l'état prédéfini,
la fonction intermédiaire étant la fonction qui, appliquée au code d'authentification actuel et au code d'état de l'état prédéfini, délivre un code d'authentification qui est le code d'authentification saisi si le dispositif est dans l'état prédéfini.

5. Procédé selon l'une des revendications 1 à 4, dans lequel on détecte un état prédéfini parmi une pluralité d'états prédéfinis, chaque état prédéfini de la pluralité d'états prédéfinis étant respectivement associé à une fonction prédéfinie.

6. Procédé selon l'une quelconque des revendications 1 à 5, comprenant en outre une mise en œuvre d'un traitement de sécurité.

7. Procédé selon l'une quelconque des revendications 1 à 6, dans lequel le serveur authentifie le dispositif électronique si l'état prédéfini du dispositif électronique est compris dans une liste d'états prédéfinis autorisés.

8. Procédé selon la revendication 7, dans lequel ladite liste d'états prédéfinis autorisés varie en fonction du temps.

9. Serveur de gestion d'un dispositif électronique associé à un utilisateur, comprenant :
- un module d'obtention (401, 401') d'un code d'authentification actuel,
- un module de réception (402, 402') d'un code d'authentification saisi associé au dispositif électronique,
- un module de détection (404, 404') d'un état prédéfini du dispositif électronique à partir du code d'authentification actuel et du code d'authentification saisi, si le code d'authentification saisi peut être obtenu par une application au code d'authentification actuel d'une fonction prédéfinie associée à l'état prédéfini
dans lequel le serveur est configuré pour mettre en œuvre une première fois l'obtention, la réception, et la détection à un premier instant, et à un deuxième instant postérieur au premier instant, et répéter l'obtention, la réception, et la détection, les codes d'authentification actuels étant déterminés au cours des obtentions en tenant compte de l'instant,
l'obtention comprend l'obtention d'une première pluralité de codes d'authentification actuels chacun associé à une fenêtre, la détection étant mise en œuvre pour au moins un code d'authentification actuel de la première pluralité de codes d'authentification actuels, et **caractérisé en ce que** si l'état prédéfini détecté au premier instant ou au deuxième instant est un état dans lequel un module de détermination de l'instant du dispositif électronique est défaillant, alors pour des instants ultérieurs l'obtention comprend l'obtention d'une deuxième pluralité de codes d'authentification actuels chacun associé à une fenêtre, la deuxième pluralité ayant un cardinal plus élevé que la première pluralité.

10. Programme d'ordinateur comportant des instructions pour l'exécution des étapes d'un procédé de gestion selon l'une quelconque des revendications 1 à 8, lorsque ledit programme est exécuté par un ordinateur.

11. Support d'enregistrement lisible par un ordinateur sur lequel est enregistré un programme d'ordinateur comprenant des instructions pour l'exécution des étapes d'un procédé selon l'une quelconque des revendications 1 à 8.

## Patentansprüche

1. Verfahren zum Verwalten einer einem Benutzer zugeordneten elektronischen Vorrichtung, das von einem Server durchgeführt wird, umfassend:
p- ein Erhalten (C0) eines aktuellen Authentifizierungscodes,
q- ein Empfangen (C5) eines erfassten Authentifizierungscodes, der der elektronischen Vorrichtung zugeordnet ist,
r- ein Erfassen (C7) eines vordefinierten Zustands der elektronischen Vorrichtung anhand des aktuellen Authentifizierungscodes und des erfassten Authentifizierungscodes, wenn der erfasste Authentifizierungscode durch eine Anwendung einer vordefinierten Funktion, die dem vordefinierten Zustand zugeordnet ist, auf den aktuellen Authentifizierungscode erhalten werden kann
wobei die Schritte p bis r ein erstes Mal zu einem ersten Zeitpunkt durchgeführt werden, und zu einem zweiten Zeitpunkt nach dem ersten Zeitpunkt die Schritte p bis r wiederholt werden, wobei die aktuellen Authentifizierungscodes im Laufe der Schritte p unter Berücksichtigung des Zeitpunktes bestimmt werden,
der Schritt p umfasst das Erhalten einer ersten Vielzahl von aktuellen Authentifizierungscodes, die jeweils einem Fenster zugeordnet sind, wobei der Schritt r für wenigstens einen aktuellen Authentifizierungscode der ersten Vielzahl von aktuellen Authentifizierungscodes durchgeführt wird, und **dadurch gekennzeichnet, dass**
wenn der vordefinierte Zustand, der zum ersten Zeitpunkt oder zum zweiten Zeitpunkt erfasst wird, ein Zustand ist, in dem ein Modul zum Bestimmen des Zeitpunktes der elektronischen Vorrichtung fehlerhaft ist, der Schritt p dann für nachfolgende Zeitpunkte das Erhalten einer zweiten Vielzahl von aktuellen Authentifizierungscodes, die jeweils einem Fenster zugeordnet sind, umfasst, wobei die zweite Vielzahl eine höhere Kardinalzahl als die erste Vielzahl aufweist.

2. Verfahren nach Anspruch 1, das ferner ein Vergleichen des aktuellen Authentifizierungscodes mit dem empfangenen erfassten Authentifizierungscode umfasst.

3. Verfahren nach Anspruch 2, bei dem der Schritt r durchgeführt wird, wenn der aktuelle Authentifizierungscode von dem empfangenen erfassten Authentifizierungscode abweicht.

4. Verfahren nach einem der Ansprüche 1 bis 3, wobei der Schritt r umfasst:
- ein Anwenden der zu der vordefinierten Funktion umgekehrten Funktion auf den erfassten Authentifizierungscode, um einen Zwischenauthentifizierungscode zu erhalten, und ein Vergleichen des Zwischenauthentifizierungscodes mit dem aktuellen Authentifizierungscode, um daraus zu schließen, dass sich die elektronische Vorrichtung in dem vordefinierten Zustand befindet, oder
- ein Anwenden der vordefinierten Funktion auf den aktuellen Authentifizierungscode, um einen geänderten Authentifizierungscode zu erhalten, und ein Vergleichen des geänderten Authentifizierungscodes mit dem empfangenen erfassten Authentifizierungscode, um daraus zu schließen, dass sich die Vorrichtung in dem vordefinierten Zustand befindet, oder
- ein Anwenden einer Zwischenfunktion auf den aktuellen Authentifizierungscode und auf den erfassten Authentifizierungscode, um einen Zwischenzustandscode zu erhalten, und ein Vergleichen des Zwischenzustandscodes mit einem Zustandscode, der dem vordefinierten Zustand zugeordnet ist, um daraus zu schließen, dass sich die elektronische Vorrichtung in dem vordefinierten Zustand befindet,
wobei die Zwischenfunktion die Funktion ist, die auf den aktuellen Authentifizierungscode und auf den Zustandscode des vordefinierten Zustand angewendet einen Authentifizierungscode liefert, welcher der erfasste Authentifizierungscode ist, wenn sich die Vorrichtung in dem vordefinierten Zustand befindet.

5. Verfahren nach einem der Ansprüche 1 bis 4, bei dem ein vordefinierter Zustand aus einer Vielzahl von vordefinierten Zuständen erfasst wird, wobei jeder vordefinierte Zustand der Vielzahl von vordefinierten Zuständen jeweils einer vordefinierten Funktion zugeordnet ist.

6. Verfahren nach einem der Ansprüche 1 bis 5, ferner umfassend eine Durchführung einer Sicherheitsverarbeitung.

7. Verfahren nach einem der Ansprüche 1 bis 6, bei dem der Server das elektronische Gerät authentifiziert, wenn der vordefinierte Zustand der elektronischen Vorrichtung in einer Liste von autorisierten vordefinierten Zustände enthalten ist.

8. Verfahren nach Anspruch 7, bei dem die Liste von autorisierten vordefinierten Zuständen in Abhängigkeit von der Zeit variiert.

9. Server zum Verwalten eines elektronischen Gerätes, das einem Benutzer zugeordnet ist, umfassend:
- ein Modul zum Erhalten (401, 401') eines aktuellen Authentifizierungscodes,
- ein Modul zum Empfangen (402, 402') eines erfassten Authentifizierungscodes, der der elektronischen Vorrichtung zugeordnet ist,
- ein Modul zum Erfassen (404, 404') eines vordefinierten Zustands der elektronischen Vorrichtung anhand des aktuellen Authentifizierungscodes und des erfassten Authentifizierungscodes, wenn der erfasste Authentifizierungscode durch eine Anwendung einer vordefinierten Funktion, die dem vordefinierten Zustand zugeordnet ist, auf den aktuellen Authentifizierungscode erhalten werden kann,
wobei der Server dazu ausgelegt ist, das Erhalten, das Empfangen und das Erfassen ein erstes Mal zu einem ersten Zeitpunkt durchzuführen und zu einem zweiten Zeitpunkt nach dem ersten Zeitpunkt das Erhalten, das Empfangen und das Erfassen zu wiederholen, wobei die aktuellen Authentifizierungscodes während der Erhaltungen unter Berücksichtigung des Zeitpunktes bestimmt werden,
das Erhalten umfasst das Erhalten einer ersten Vielzahl von aktuellen Authentifizierungscodes, die jeweils einem Fenster zugeordnet sind, wobei das Erfassen für wenigstens einen aktuellen Authentifizierungscode der ersten Vielzahl von aktuellen Authentifizierungscodes durchgeführt wird, und **dadurch gekennzeichnet, dass**
wenn der vordefinierte Zustand, der zum ersten Zeitpunkt oder zum zweiten Zeitpunkt erfasst wird, ein Zustand ist, in dem ein Modul zum Bestimmen des Zeitpunktes der elektronischen Vorrichtung fehlerhaft ist, das Erfassen dann für nachfolgende Zeitpunkte das Erhalten einer zweiten Vielzahl von aktuellen Authentifizierungscodes, die jeweils einem Fenster zugeordnet sind, umfasst, wobei die zweite Vielzahl eine höhere Kardinalzahl als die erste Vielzahl aufweist.

10. Computerprogramm, umfassend Befehle für die Durchführung der Schritte eines Verwaltungsverfahrens nach einem der Ansprüche 1 bis 8, wenn das Programm durch einen Computer ausgeführt wird.

11. Durch einen Computer lesbarer Aufzeichnungsträger, auf dem ein Computerprogramm gespeichert ist, das Befehle für die Durchführung der Schritte eines Verfahrens nach einem der Ansprüche 1 bis 8 umfasst.

## Claims

1. A method for managing an electronic device associated with a user and implemented by a server, comprising:
p- obtaining (C0) a current authentication code,
q- receiving (C5) an entered authentication code associated with the electronic device,
r- detecting (C7) a predefined status of the electronic device from the current authentication code and the entered authentication code, if the entered authentication code can be obtained by application to the current authentication code of a predefined function associated with the predefined status,
wherein steps p to r are implemented for the first time at a first instant, and at a second instant subsequent to the first instant, steps p to r are repeated, the current authentication codes being determined during steps p by taking into account the instant,
step p comprises obtaining a first plurality of current authentication codes each associated with a window, step r being implemented for at least one current authentication code of the first plurality of current authentication codes, and **characterized in that**
if the predefined status detected at the first instant or at the second instant is a status in which a module for determining the instant of the electronic device is faulty, then for subsequent instants step p comprises obtaining a second plurality of current authentication codes each associated with a window, the second plurality having a higher cardinality than the first plurality.

2. The method according to claim 1, further comprising comparing the current authentication code with the entered authentication code received.

3. The method according to claim 2, wherein step r is implemented if the current authentication code differs from the entered authentication code received.

4. The method according to any one of claims 1 to 3, wherein step r includes:
- applying the function inverse to said predefined function to the entered authentication code in order to obtain an intermediate authentication code, and comparing the intermediate authentication code with the current authentication code, to deduce therefrom that the electronic device is in the predefined status, or
- applying the predefined function to the current authentication code in order to obtain a modified authentication code, and comparing the modified authentication code with the entered authentication code received, in order to deduce that the device is in the predefined status, or
- applying an intermediate function to the current authentication code and to the entered authentication code in order to obtain an intermediate status code, and comparing the intermediate status code with a status code associated with the predefined status, to deduce therefrom that the electronic device is in the predefined status,
the intermediate function being the function which, applied to the current authentication code and to the status code of the predefined status, outputs an authentication code which is the entered authentication code if the device is in the predefined status.

5. The method according to any of claims 1 to 4, wherein a predefined status is detected among a plurality of predefined statuses, each predefined status of the plurality of predefined statuses being respectively associated with a predefined function.

6. The method according to any one of claims 1 to 5, further comprising implementing a security processing.

7. The method according to any one of claims 1 to 6, wherein the server authenticates the electronic device if the predefined status of the electronic device is comprised in a list of authorized predefined statuses.

8. The method according to claim 7, wherein said list of authorized predefined statuses varies as a function of time.

9. A management server for an electronic device associated with a user, comprising:
- a module for obtaining (401, 401') a current authentication code,
- a module for receiving (402, 402') an entered authentication code associated with the electronic device,
- a module for detecting (404, 404') a predefined status of the electronic device from the current authentication code and the entered authentication code, if the entered authentication code can be obtained by application to the current authentication code of a predefined function associated with the predefined status
wherein the server is configured to first implement the obtaining, receiving and detection operations at a first instant, and at a second instant subsequent to the first instant, and repeat the obtaining, receiving and detection operations, the current authentication codes being determined during the obtaining operations by taking into account the instant,
the obtaining operation comprises obtaining a first plurality of current authentication codes each associated with a window, the detection operation being implemented for at least one current authentication code of the first plurality of current authentication codes, and **characterized in that**
if the predefined status detected at the first instant or at the second instant is a status in which a module for determining the instant of the electronic device is faulty, then for subsequent instants the obtaining operation comprises obtaining a second plurality of current authentication codes each associated with a window, the second plurality having a higher cardinality than the first plurality.

10. A computer program including instructions for executing the steps of a management method according to any one of claims 1 to 8, when said program is executed by a computer.

11. A recording medium readable by a computer on which is recorded a computer program comprising instructions for executing the steps of a method according to any one of claims 1 to 8.
